# DEMANDE DE BREVET EUROPEEN

(11) **EP 4 570 593 A1**
(43) Date de publication de la demande: **18.06.2025**
(21) Numéro de dépôt: 24213440.1
(22) Date de dépôt: 15.11.2024
(51) Int. Cl.: B60Q 1/04, B60R 13/00, B60R 21/34, B60R 19/52

(54) **CALANDRE LUMINEUSE ENCAISSANT DES CHOCS, POUR UN VÉHICULE**

(30) Priorité: 13.12.2023 FR 2314072
(71) Demandeur: Stellantis Auto SAS, 78300 Poissy (FR)
(72) Inventeur: SCHULTE, LAURENT, 25230 DASLE (FR); BORE, MICHAEL, 25420 VOUJEAUCOURT (FR)
(74) Mandataire: ESIP

(57) **Abrégé**

Une calandre lumineuse (CL) équipe un véhicule et comprend un boîtier (BC) délimitant une cavité (CB) logeant une pièce centrale (PCL), comportant un logo, et un dispositif d'éclairage générant une lumière éclairant la pièce centrale (PCL), et une glace de protection (GP) solidarisée au boîtier (BC) en refermant la cavité (CB) devant la pièce centrale (PCL). Le boîtier (BC) comprend deux parties latérales (PLB2), droite et gauche, ayant une première profondeur moyenne, et une partie centrale (PCB) intercalée entre ces parties latérales (PLB2), logeant la pièce centrale (PCL) et ayant une seconde profondeur moyenne strictement inférieure à la première profondeur moyenne afin de permettre un enfoncement central de la calandre lumineuse (CL) sans contact avec un élément du véhicule placé derrière elle en cas de choc avant subi.

## Description

### Domaine technique de l'invention

L'invention concerne les calandres lumineuses destinées à être installées dans les zones centrales des extrémités avant de certains véhicules.

### Etat de la technique

Certains véhicules, généralement de type automobile, comprennent une calandre lumineuse installée dans la zone centrale de leur extrémité avant, et comprenant :
- un boîtier qui délimite au moins partiellement une cavité logeant une pièce centrale comportant un logo et un dispositif d'éclairage propre à générer une lumière éclairant au moins la pièce centrale, éventuellement par l'arrière, et
- une glace de protection solidarisée fixement au boîtier, par exemple par soudage ou collage, en refermant la cavité devant la pièce centrale.

En raison de son positionnement, ce type de calandre lumineuse doit participer, en cas de choc subi par l'extrémité avant du véhicule, à l'absorption d'une partie de l'énergie de ce choc. De ce fait, le boîtier de la calandre lumineuse a une profondeur (suivant la direction longitudinale du véhicule) qui est relativement importante, ce qui rend difficile l'implantation de la calandre lumineuse lorsqu'une partie au moins de la zone située derrière elle est fortement encombrée (ce qui est fréquemment le cas). Lorsqu'un élément ou équipement est installé fixement à très faible distance de la face arrière du boîtier, comme c'est fréquemment le cas dans la partie centrale de ce dernier, il est fréquent lors d'un choc avant que le recul longitudinal de la calandre lumineuse soit brusquement interrompu par le contact de son boîtier avec cet élément ou équipement, ce qui provoque généralement la casse de la calandre lumineuse et/ou l'endommagement de l'élément ou équipement précité, et donc augmente les coûts des réparations.

L'invention a donc notamment pour but d'améliorer la situation.

### Présentation de l'invention

Elle propose notamment à cet effet une calandre lumineuse propre à équiper une zone centrale d'une extrémité avant d'un véhicule, et comprenant, d'une part, un boîtier délimitant au moins partiellement une cavité logeant une pièce centrale comportant un logo et un dispositif d'éclairage propre à générer une lumière éclairant au moins la pièce centrale, et, d'autre part, une glace de protection solidarisée fixement au boîtier en refermant la cavité devant la pièce centrale.

Cette calandre lumineuse se caractérise par le fait que son boîtier comprend :
- deux parties latérales, droite et gauche, ayant une première profondeur moyenne, et
- une partie centrale intercalée entre les parties latérales, logeant la pièce centrale et ayant une seconde profondeur moyenne strictement inférieure à la première profondeur moyenne afin de permettre un enfoncement central de la calandre lumineuse sans contact avec un élément du véhicule placé derrière elle en cas de choc subi par l'extrémité avant du véhicule.

Grâce à cette profondeur réduite de la partie centrale, on définit un renfoncement vide définissant un jeu et permettant la déformation par enfoncement de la calandre lumineuse lors d'un choc avant, pour absorber une partie de l'énergie de ce choc, quasiment sans risque d'écrasement contre un élément (ou équipement) du véhicule installé derrière ce renfoncement vide.

La calandre lumineuse selon l'invention peut comporter d'autres caractéristiques qui peuvent être prises séparément ou en combinaison, et notamment :
- la première profondeur moyenne peut être comprise entre 35 mm et 50 mm ;
- la seconde profondeur moyenne peut être comprise entre 20 mm et 30 mm ;
- elle peut comprendre, d'une part, deux masques arrière installés à droite et à gauche de la pièce centrale respectivement dans les parties latérales du boîtier et propres à masquer des parties techniques du boîtier, et, d'autre part, deux glaces internes installées à droite et à gauche de la pièce centrale respectivement dans les parties latérales du boîtier et entre les masques arrière et la glace de protection. Dans ce cas, le dispositif d'éclairage peut être propre à générer des lumières éclairant respectivement les glaces internes ;
- en présence de la dernière option, chacune des glaces internes peut comprendre une face avant sur laquelle sont définis des éléments tridimensionnels définissant ensemble une grille de calandre ;
- le dispositif d'éclairage peut comprendre un diffuseur de lumière installé dans la partie centrale du boîtier derrière la pièce centrale et propre à diffuser une partie de la lumière générée vers une face arrière de cette dernière ;
- en présence des deux dernières options, le dispositif d'éclairage peut comprendre au moins trois sources de lumière propres à générer des lumières respectivement pour le diffuseur de lumière et les glaces internes ;
- en présence de la dernière sous-option, chaque source de lumière peut comprendre au moins une diode électroluminescente.

L'invention propose également un véhicule, éventuellement de type automobile, et comprenant, d'une part, une extrémité avant comportant une zone centrale, et, d'autre part, une calandre lumineuse du type de celle présentée ci-avant et installée dans la partie centrale de cette extrémité avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement et fonctionnellement, dans une vue de face du côté de la face avant, un exemple de réalisation d'une calandre lumineuse selon l'invention,
[Fig. 2] illustre schématiquement et fonctionnellement, dans une vue du dessus, la calandre lumineuse de la figure 1,
[Fig. 3] illustre schématiquement et fonctionnellement, dans une vue en perspective, des éléments de la calandre lumineuse des figures 1 et 2, avant leur assemblage,
[Fig. 4] illustre schématiquement, dans une vue en coupe dans un plan longitudinal et vertical au niveau de la partie latérale gauche du boîtier, la calandre lumineuse des figures 1 et 2, et
[Fig. 5] illustre schématiquement, dans une vue en coupe dans un autre plan longitudinal et vertical au niveau de la partie centrale du boîtier, la calandre lumineuse des figures 1 et 2.

### Description détaillée de l'invention

L'invention a notamment pour but de proposer une calandre lumineuse CL destinée à être installée dans une zone centrale d'une extrémité avant d'un véhicule, et permettant d'encaisser des chocs avant dans un environnement encombré.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule comprenant une extrémité avant ayant une zone centrale devant accueillir une calandre lumineuse.

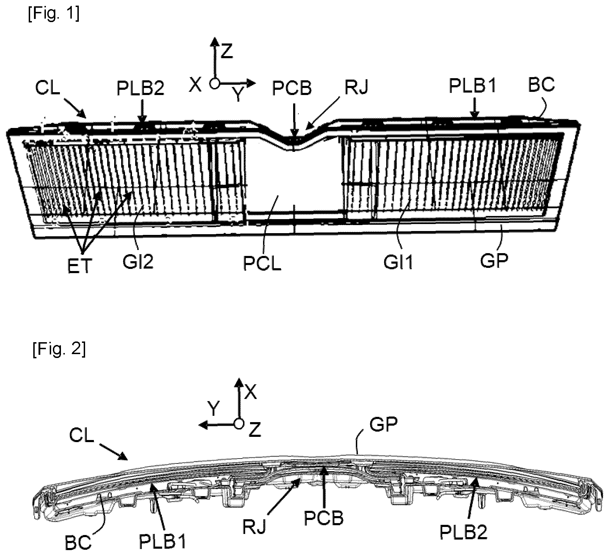

Sur les figures 1 à 5 la direction X est destinée à être parallèle à la direction longitudinale du véhicule, laquelle est sensiblement parallèle aux côtés latéraux (ou longitudinaux) comportant les portières latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

Par ailleurs, dans ce qui précède et ce qui suit la notion « d'avant » est définie par rapport à l'extrémité avant du véhicule, et la notion « d'arrière » est définie par rapport à l'extrémité arrière du véhicule (opposée à l'extrémité avant). Par conséquent, la partie avant d'un élément est (destinée à être) orientée vers l'extrémité avant du véhicule, tandis que la partie arrière de cet élément est (destinée à être) orientée vers l'extrémité arrière du véhicule.

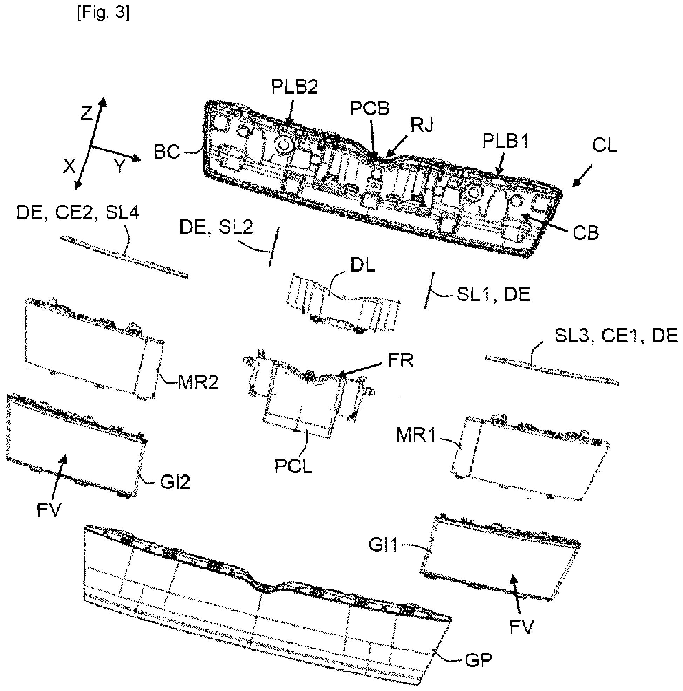

On a schématiquement illustré sur les figures 1 à 5 un exemple de réalisation d'une calandre lumineuse CL selon l'invention (assemblée (figures 1, 2, 4 et 5) ou non assemblée (figure 3)), destinée à être installée dans la zone centrale de l'extrémité avant d'un véhicule (ici une voiture).

Comme illustré au moins partiellement sur les figures 1 à 5, une calandre lumineuse CL, selon l'invention, comprenant au moins un boîtier BC, une pièce centrale PCL comportant un logo (non illustré, et représentatif de la marque du véhicule), un dispositif d'éclairage DE et une glace de protection GP.

Le boîtier BC délimite au moins partiellement une cavité CB qui loge notamment la pièce centrale PCL et le dispositif d'éclairage DE (voir figure 3) qui est propre à générer au moins une lumière destinée à éclairer au moins la pièce centrale PCL.

La glace de protection GP est solidarisée fixement au boîtier BC en refermant la cavité CB devant la pièce centrale PCL. Cette solidarisation fixe peut se faire, par exemple, par soudage ou collage. Mais elle pourrait aussi se faire par vissage et/ou clippage.

Comme illustré au moins partiellement sur les figures 1 à 5, le boîtier BC comprend deux parties latérales PLBj, droite (j = 1) et gauche (j = 2), et une partie centrale PCB intercalée entre (et prolongée à droite et à gauche respectivement par) ces parties latérales PLBj.

Chacune des parties latérales PLBj a une première profondeur moyenne e1 (ici suivant la direction longitudinale X), adaptée à l'environnement de la zone centrale de l'extrémité avant du véhicule, et plus précisément derrière elle (PLBj).

Par ailleurs, la partie centrale PCB loge la pièce centrale PCL et a une seconde profondeur moyenne e2 (ici suivant la direction longitudinale X) qui est strictement inférieure à la première profondeur moyenne e1. Cette profondeur réduite de la partie centrale PCB permet l'enfoncement central de la calandre lumineuse CL sans contact avec un élément du véhicule placé derrière elle (CL), en cas de choc subi par l'extrémité avant du véhicule.

On comprendra que cette profondeur réduite de la partie centrale PCB permet aux faces externes de la partie centrale PCB et d'une portion des parties latérales PLBj de définir localement un renfoncement vide RJ sur une profondeur égale à (e1 - e2), et définissant un jeu. Ce renfoncement vide RJ permet la déformation par enfoncement de la calandre lumineuse CL lors d'un choc avant, pour absorber une partie de l'énergie de ce choc, quasiment sans risque d'écrasement contre un élément (ou équipement) du véhicule installé derrière ce renfoncement vide RJ. Cela permet de réduire la probabilité de casse de la calandre lumineuse CL et/ou d'endommagement de l'élément (ou équipement) du véhicule installé derrière le renfoncement vide RJ, et donc de réduire les coûts des réparations.

Par exemple, la première profondeur moyenne e1 peut être comprise entre 35 mm et 50 mm. A titre d'exemple, cette première profondeur moyenne e1 peut être égale à 42 mm. Mais d'autres valeurs de cette première profondeur moyenne e1 peuvent être choisies, dès lors qu'elles sont strictement supérieures à la seconde profondeur moyenne e2.

Egalement par exemple, la seconde profondeur moyenne e2 peut être comprise entre 20 mm et 30 mm. A titre d'exemple, cette seconde profondeur moyenne e2 peut être égale à 25 mm. Mais d'autres valeurs de cette seconde profondeur moyenne e2 peuvent être choisies, dès lors qu'elles sont strictement inférieures à la première profondeur moyenne e1.

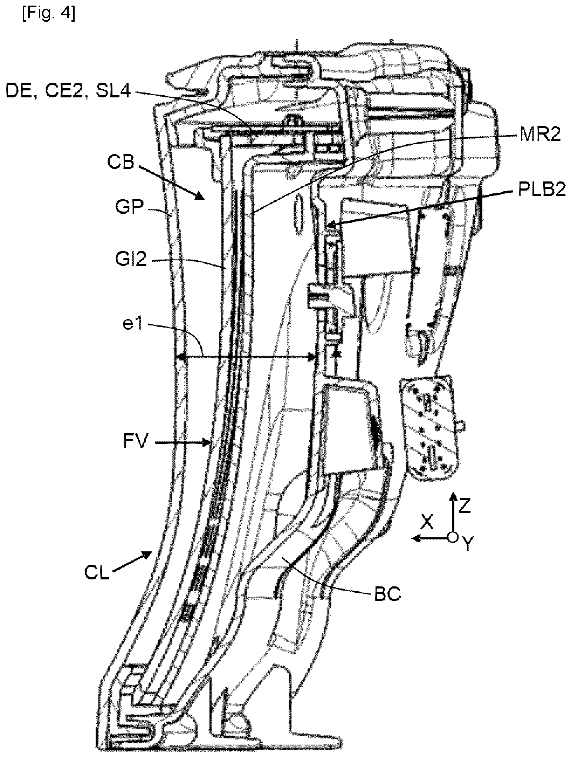

Egalement par exemple, et comme illustré non limitativement sur les figures 3 et 4, la calandre lumineuse CL peut aussi comprendre deux masques arrière MRj, droit (j = 1) et gauche (j = 2), et deux glaces internes Glj, droite (j = 1) et gauche (j = 2). Les deux masques arrière MRj sont installés à droite et à gauche de la pièce centrale PCL respectivement dans les parties latérales PLBj droite et gauche, et sont propres à masquer des parties techniques du boîtier BC. Les deux glaces internes Glj sont installées à droite et à gauche de la pièce centrale PCL respectivement dans les parties latérales PLBj droite et gauche et entre les masques arrière MRj droit et gauche et la glace de protection GP. Dans ce cas, le dispositif d'éclairage DE est aussi propre à générer des lumières destinées à éclairer respectivement les glaces internes Glj. Ainsi, la quasi-totalité de la partie avant de la calandre lumineuse CL observable au travers de sa glace de protection GP est éclairée (ou illuminée), éventuellement par un rétro-éclairage (comme on le verra plus loin).

Egalement par exemple, et comme illustré non limitativement sur la figure 1, chacune des glaces internes Glj peut comprendre une face avant FV, orientée vers la glace de protection GP, et sur laquelle sont définis des éléments tridimensionnels ET qui définissent ensemble une grille de calandre. On notera que dans l'exemple illustré les éléments tridimensionnels ET s'étendent sensiblement suivant la direction verticale Z afin de définir des lignes parallèles entre elles. Mais des éléments tridimensionnels ET pourraient s'étendre sensiblement suivant la direction verticale Z et d'autres éléments tridimensionnels ET pourraient s'étendre sensiblement suivant la direction transversale Y, afin de définir un quadrillage, par exemple. On pourrait aussi avoir des éléments tridimensionnels ET s'étendant sensiblement suivant deux directions perpendiculaires entre elles et différentes des direction verticale Z et direction transversale Y, afin de définir un quadrillage, par exemple.

Ces éléments tridimensionnels ET peuvent avoir une section transversale de forme rectangulaire ou triangulaire ou encore trapézoïdale, par exemple.

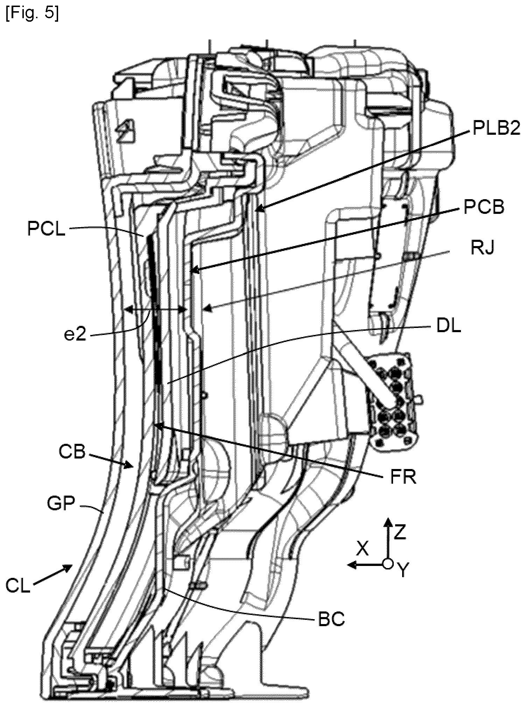

Egalement par exemple, et comme illustré non limitativement et partiellement sur les figures 3 et 5, le dispositif d'éclairage DE peut comprendre un diffuseur de lumière DL qui est installé dans la partie centrale PCB du boîtier BC, derrière la pièce centrale PCL. Ce diffuseur de lumière DL est propre à diffuser une partie de la lumière générée par le dispositif d'éclairage DE vers la face arrière FR de la pièce centrale PCL. Ce diffuseur de lumière DL peut être un guide de lumière de type plat qui renvoie la lumière, injectée dans l'un au moins de ses côtés par le dispositif d'éclairage DE, vers la face arrière FR de la pièce centrale PCL afin de l'éclairer par l'arrière de façon sensiblement homogène. Mais dans une variante de réalisation, on pourrait se passer de diffuseur de lumière DL et effectuer un éclairage de la face avant de la pièce centrale PCL (opposée à sa face arrière FR).

Egalement par exemple, et comme illustré non limitativement et partiellement sur les figures 3 et 4, le dispositif d'éclairage DE peut comprendre au moins trois sources de lumière SLk qui sont propres à générer des lumières respectivement pour le diffuseur de lumière DL et les deux glaces internes Glj.

On notera que dans l'exemple illustré non limitativement et partiellement sur la figure 3, le dispositif d'éclairage DE comprend quatre sources de lumière SLk (k = 1 à 4). Des première SL1 (k = 1) et deuxième SL2 (k = 2) sources de lumière sont propres à générer des première et deuxième lumières respectivement pour deux côtés opposés (et ici sensiblement verticaux (parallèles à la direction verticale Z)) du diffuseur de lumière DL. Des troisième SL3 (k = 3) et quatrième SL4 (k = 4) sources de lumière sont propres à générer des troisième et quatrième lumières respectivement pour les deux glaces internes Glj. A cet effet, les première SL1 et deuxième SL2 sources de lumière peuvent être montées respectivement sur deux plaques de support qui sont solidarisées fixement aux deux côtés opposés (ici verticaux) du diffuseur de lumière DL, et les troisième SL3 et quatrième SL4 sources de lumière peuvent être montées respectivement sur deux cartes électroniques CE couplées aux deux plaques de support et contrôlant la génération des quatre lumières.

Par exemple, les deux cartes électroniques CE peuvent être installées respectivement sur deux côtés transversaux (ici sensiblement parallèles à la direction transversale Y et supérieurs) des glaces internes Glj. Egalement par exemple, chaque carte électronique CE peut être une carte à circuits imprimés de type PCB (« Printed Circuit Board »).

Egalement par exemple, chaque source de lumière SLk peut comprendre au moins une diode électroluminescente (ou led (« Light Emitting Diode »)). Mais en variante chaque source de lumière SLk peut comprendre au moins une diode laser ou un laser à gaz.

## Revendications

1. Calandre lumineuse (CL) propre à équiper une zone centrale d'une extrémité avant d'un véhicule, et comprenant i) un boîtier (BC) délimitant au moins partiellement une cavité (CB) logeant une pièce centrale (PCL) comportant un logo et un dispositif d'éclairage (DE) propre à générer une lumière éclairant au moins ladite pièce centrale (PCL), et ii) une glace de protection (GP) solidarisée fixement audit boîtier (BC) en refermant ladite cavité (CB) devant ladite pièce centrale (PCL), **caractérisée en ce que** ledit boîtier (BC) comprend a) deux parties latérales (PLBj), droite et gauche, ayant une première profondeur moyenne, et b) une partie centrale (PCB) intercalée entre lesdites parties latérales (PLBj), logeant ladite pièce centrale (PCL) et ayant une seconde profondeur moyenne strictement inférieure à ladite première profondeur moyenne afin de permettre un enfoncement central de ladite calandre lumineuse (CL) sans contact avec un élément dudit véhicule placé derrière elle (CL) en cas de choc subi par ladite extrémité avant.

2. Calandre lumineuse selon la revendication 1, **caractérisée en ce que** ladite première profondeur moyenne est comprise entre 35 mm et 50 mm.

3. Calandre lumineuse selon la revendication 1 ou 2, **caractérisée en ce que** ladite seconde profondeur moyenne est comprise entre 20 mm et 30 mm.

4. Calandre lumineuse selon l'une des revendications 1 à 3, **caractérisée en ce qu'**elle comprend i) deux masques arrière (MRj) installés à droite et à gauche de ladite pièce centrale (PCL) respectivement dans lesdites parties latérales (PLBj) et propres à masquer des parties techniques dudit boîtier (BC), et ii) deux glaces internes (Glj) installées à droite et à gauche de ladite pièce centrale (PCL) respectivement dans lesdites parties latérales (PLBj) et entre lesdits masques arrière (MRj) et ladite glace de protection (GP), et **en ce que** ledit dispositif d'éclairage (DE) est propre à générer des lumières éclairant respectivement lesdites glaces internes (Glj).

5. Calandre lumineuse selon la revendication 4, **caractérisée en ce que** chacune desdites glaces internes (Glj) comprend une face avant (FV) sur laquelle sont définis des éléments tridimensionnels (ET) définissant ensemble une grille de calandre.

6. Calandre lumineuse selon l'une des revendications 1 à 5, **caractérisée en ce que** ledit dispositif d'éclairage (DE) comprend un diffuseur de lumière (DL) installé dans ladite partie centrale (PCB) derrière ladite pièce centrale (PCL) et propre à diffuser une partie de ladite lumière générée vers une face arrière (FR) de cette dernière (PCL).

7. Calandre lumineuse selon la revendication 4 ou 5 prise en combinaison avec la revendication 6, **caractérisée en ce que** ledit dispositif d'éclairage (DE) comprend au moins trois sources de lumière (SLk) propres à générer des lumières respectivement pour ledit diffuseur de lumière (DL) et lesdites glaces internes (Glj).

8. Calandre lumineuse selon la revendication 7, **caractérisée en ce que** chaque source de lumière (SLk) comprend au moins une diode électroluminescente.

9. Véhicule comprenant une extrémité avant comportant une zone centrale, **caractérisé en ce qu'**il comprend en outre une calandre lumineuse (CL) selon l'une des revendications 1 à 8, installée dans ladite zone centrale de l'extrémité avant.

10. Véhicule selon la revendication 9, **caractérisé en ce qu'**il est de type automobile.
